# EUROPÄISCHE PATENTSCHRIFT

(11) **EP 2 563 572 B1**
(45) Veröffentlichungstag und Bekanntmachung des Hinweises auf die Patenterteilung: **21.05.2014**
(21) Anmeldenummer: 11726682.5
(22) Anmeldetag: 23.04.2011
(51) Int. Cl.: B29C 70/54, G01N 29/00

(54) **VERFAHREN ZUR HERSTELLUNG EINES MIT ZUMINDEST EINEM HOHLPROFIL VERSEHENEN BAUTEILS**
METHOD FOR PRODUCING A COMPONENT COMPRISING AT LEAST ONE HOLLOW PROFILE
PROCÉDÉ DE FABRICATION D'UN ÉLÉMENT MUNI D'AU MOINS UN PROFILÉ CREUX

(30) Priorität: 29.04.2010 DE 102010018726
(43) Veröffentlichungstag der Anmeldung: 06.03.2013
(73) Patentinhaber: Premium AEROTEC GmbH, 86179 Augsburg (DE)
(72) Erfinder: ARNOLD, Ralph, 26127 Oldenburg (DE); EISENBEISS, Fred, Butjadingen Eckwarden (DE)
(74) Vertreter: Häußler, Henrik
(86) Internationale Anmeldenummer: PCT/DE2011/000451
(87) Internationale Veröffentlichungsnummer: WO 2011/134459

(56) Entgegenhaltungen:
- WO-A1-2008/107461
- US-A1- 2006 162 456
- US-B1- 6 484 583

## Beschreibung

### TECHNISCHES GEBIET

Die vorliegende Erfindung betrifft ein Verfahren zur Herstellung eines mit zumindest einem Hohlprofil versehenen Bauteils aus einem Faserverbu ndwerkstoff.

### STAND DER TECHNIK

Während der Bearbeitung von Flugzeugrumpfpaneln aus kohlefaserverstärktem Kunststoff entstehen durch Bearbeitungsschritte wie zum Beispiel Schleifen oder Fräsen und den Wasserstrahl-Schneidprozess Verunreinigungen durch Späne und Abrasivmittel. Derartige Verunreinigungen dringen insbesondere in Hohlräume von Hohlprofilen ein, die auf dem Flugzeugrumpfpanel beispielsweise durch sogenannte Stringer gebildet sind. Eine Reinigung und Trocknung dieser Stringer nach dem mechanischen Bearbeiten dieses Bauteil-Rohlings eines Flugzeugrumpfpanels ist sehr zeitaufwendig und kostenintensiv. Daher ist es anzustreben, die offenen Enden dieser Hohlräume vor dem Schritt des mechanischen Bearbeitens zu verschließen und abzudichten.

Erfolgt diese Abdichtung nach dem thermischen Behandeln des Bauteil-Rohlings, also dann, wenn dieser zum Beispiel aus dem Autoklaven entnommen wird, so treten bei bislang für diesen Zweck bekannten Materialien für Verschlussstopfen zum Abdichten der offenen Enden des Hohlprofils Probleme beim nach dem thermischen Behandeln erfolgenden Prüfen des Bauteil-Rohlings mittels Ultraschall auf, da die Grenze zwischen der Bauteilwandung und dem Stopfen keine wirksame Ultraschallreflexion ermöglicht. Das bisher für derartige Stopfen zur Verfügung stehende Material hat den Ultraschall absorbiert. Um eine zuverlässige Materialprüfung des Bauteil-Rohlings durchführen zu können, ist es bislang somit erforderlich gewesen, in einem zusätzlichen Handhabungsschritt die Stopfen nach dem Schritt der Materialprüfung mittels Ultraschall in die offenen Enden des Hohlprofils einzubringen. Dies ist sehr arbeitsaufwendig gewesen.

US 2006 10162456 A1 und WO 2008/107461 A1 offenbaren Verfahren, um Hohlprofile mittels Ultraschall zu prüfen.

### DARSTELLUNG DER ERFINDUNG

Aufgabe der vorliegenden Erfindung ist es daher, ein gattungsgemäßes Verfahren anzugeben, das ohne eine zusätzliche Handhabung des Bauteil-Rohlings ein Verschließen der offenen Enden des Hohlprofils mit jeweils einem Stopfen ermöglicht, ohne dass dadurch die zerstörungsfreie Materialprüfung des Bauteil-Rohlings mittels Ultraschall beeinträchtigt wird.

Des Weiteren ist es eine Aufgabe der vorliegenden Erfindung, einen für ein derartiges Verfahren geeigneten Stopfen anzugeben.

Die auf das Verfahren zur Herstellung eines mit zumindest einem Hohlprofil versehenen Bauteils aus einem Faserverbundwerkstoff gerichtete Ausgabe wird gelöst durch ein Verfahren nach Anspruch 1 mit den Schritten:
a) Herstellen eines Bauteil-Rohlings aus dem Faserverbundwerkstoff;
b) thermisches Behandeln des Bauteil-Rohlings;
c) Verschließen der offenen Enden des Hohlprofils mit jeweils einem Stopfen;
d) Prüfen des thermisch behandelten Bauteil-Rohlings mittels Ultraschall nach einem Verfahren der zerstörungsfreien Materialprüfung;
e) mechanisches Bearbeiten des Bauteil-Rohlings, um das fertige Bauteil zu erhalten;
f) Entfernen der Stopfen;
wobei der jeweilige Stopfen aus einem geschlossenporigen Schaum besteht oder diesen zumindest an seinem Außenumfang aufweist.

Der Schritt des mechanischen Bearbeitens kann alternativ auch unmittelbar nach dem Verschließen der offenen Enden durchgeführt werden, wobei dann das fertige Bauteil der zerstörungsfreien Materialprüfung unterzogen wird.

Da folglich die Reihenfolge der Schritte d) und e) vertauschbar ist, wird die das Verfahren betreffende Aufgabe alternativ auch gelöst durch ein Verfahren nach Anspruch 2 mit den Schritten:
a) Herstellen eines Bauteil-Rohlings (1) aus dem Faserverbundwerkstoff;
b) thermisches Behandeln des Bauteil-Rohlings (1);
c) Verschließen der offenen Enden (16, 18) des Hohlprofils (14) mit jeweils einem Stopfen (2, 3);
d') mechanisches Bearbeiten des Bauteil-Rohlings (1), um das fertige Bauteil zu erhalten;
e') Prüfen des fertigen Bauteils mittels Ultraschall nach einem Verfahren der zerstörungsfreien Materialprüfung;
f) Entfernen der Stopfen (2, 3);
wobei der jeweilige Stopfen (2, 3) aus einem geschlossenporigen Schaum besteht oder diesen zumindest an seinem Außenumfang aufweist.

### VORTEILE

Das erfindungsgemäße Verwenden eines Stopfens aus einem ultraschallreflektierenden Material, wie einem geschlossenporigen Schaum, wobei der Stopfen dieses ultraschallreflektierende Material zumindest an seinem Außenumfang aufweist oder gar im Wesentlichen vollständig aus diesem Material besteht, ermöglicht es, den beziehungsweise die Stopfen bereits nach dem thermischen Behandeln des Bauteil-Rohlings anzubringen. Zu diesem Zeitpunkt muss der Bauteil-Rohling manuell aus dem Autoklaven beziehungsweise aus einer entsprechenden Heizvorrichtung entnommen werden und Formkerne müssen manuell entfernt werden. Anlässlich dieser manuellen Handhabung des Bauteil-Rohlings ist es nicht sehr aufwendig, in ihrer Außenkontur an die Innenkontur des Hohlprofils angepasste Stopfen in die offenen Enden des Hohlprofils einzubringen und diese so zu verschließen. Danach kann die Bearbeitung des Bauteil-Rohlings mit dem Prüfen des thermisch behandelten Bauteil-Rohlings mittels Ultraschall nach einem Verfahren der zerstörungsfreien Materialprüfung fortgeführt werden. Die erfindungsgemäßen Materialeigenschaften des hier verwendeten Stopfens gewährleisten, dass die Ultraschall-Schwingungen nicht vom Stopfen absorbiert werden, sondern von dessen Oberfläche reflektiert werden, so dass die Stoffgrenze zwischen dem Wandmaterial des Bauteil-Rohlings und dem Stopfenmaterial für das zur Materialprüfung verwendete Ultraschall-Messgerät deutlich erkennbar ist. Diese Vorteile können mit Stopfen aus elastischem oder weichem Schaum nicht erzielt werden. Erst durch die Verwendung der beanspruchten Stopfen wird es möglich, die Verfahrensschritte in der beanspruchten Reihenfolge durchzuführen und einen zusätzlichen Handhabungsschritt einzusparen.

Der erfindungsgemäße Stopfen schließt das offene Ende des Hohlprofils dicht ab und verhindert so ein Eindringen von Staub, Wasser und anderen Fremdkörpern während des Schrittes des mechanischen Bearbeitens des Bauteil-Rohlings. Diese erfindungsgemäßen Stopfen lassen sich nach der mechanischen Bearbeitung problemlos und rückstandsfrei aus den offenen Enden des Hohlprofils wieder entnehmen.

Weitere bevorzugte und vorteilhafte Ausgestaltungsmerkmale des erfindungsgemäßen Verfahrens sind Gegenstand der Unteransprüche.

Vorzugsweise ist der Schaum des Stopfens aus Polyehtylen gebildet oder er weist dieses vorwiegend auf. Versuche der Erfinder haben gezeigt, dass sich Polyethylenschaum besonders zur Durchführung des erfindungsgemäßen Verfahrens eignet.

Vorteilhaft ist es auch, wenn der Schaum des Stopfens eine Dichte von maximal 30 kg/m³, vorzugsweise zwischen 10 kg/m³ und 20 kg/m³, weiter vorzugsweise unter 18 kg/m³ unter besonders bevorzugt 15 kg/m³ aufweist. Schäume dieser Dichte eignen sich besonders zur Durchführung des erfindungsgemäßen Verfahrens und gewährleisten auf besondere Weise die erwünschte Reflexion der Ultraschall-Wellen an den Grenzflächen bei gleichzeitig erzielbarer hoher Dichtwirkung.

Besonders vorteilhaft ist es auch, wenn der Schaum des Stopfens eine Porengröße von maximal 2 mm, vorzugsweise zwischen 0,3 mm und 1,5 mm, weiter vorzugsweise zwischen 0,6 mm und 1,2 mm aufweist. Diese Porengrößen gewährleisten einerseits eine hohe Festigkeit des Schaums, andererseits aber auch die erwünschte Reflexionsfähigkeit der vom Schaum gebildeten Stopfenoberfläche für Ultraschallschwingungen.

Vorteilhaft ist das Verfahren, wenn der Faserverbundwerkstoff kohlefaserverstärkter Kunststoff ist.

Das erfindungsgemäße Verfahren eignet sich besonders dann, wenn die mechanische Bearbeitung des Bauteil-Rohlings eine spanabhebende Bearbeitung, wie beispielsweise Sägen, Fräsen, Schleifen, Hobeln und/oder eine schneidende Bearbeitung, wie beispielsweise Wasserstrahlschneiden, umfasst. Bei diesen Bearbeitungsmethoden treten besonders starke Verunreinigungen auf, deren Eintritt in die Hohlprofile von der erfindungsgemäßen Stopfenanbringung verhindert wird.

Zur Durchführung des erfindungsgemäßen Verfahrens eignet sich besonders ein Stopfen, der aus einem geschlossenporigen Schaum besteht oder diesen zumindest an seinem Außenumfang aufweist.

Dieser Stopfen weist bevorzugt die bereits vorstehend in Bezug auf das Verfahren genannten Materialeigenschaften auf.

Bevorzugte Ausführungsbeispiele der Erfindung mit zusätzlichen Ausgestaltungsdetails und weiteren Vorteilen sind nachfolgend unter Bezugnahme auf die beigefügten Zeichnung näher beschrieben und erläutert.

### KURZE BESCHREIBUNG DER ZEICHNUNGEN

Es zeigt:

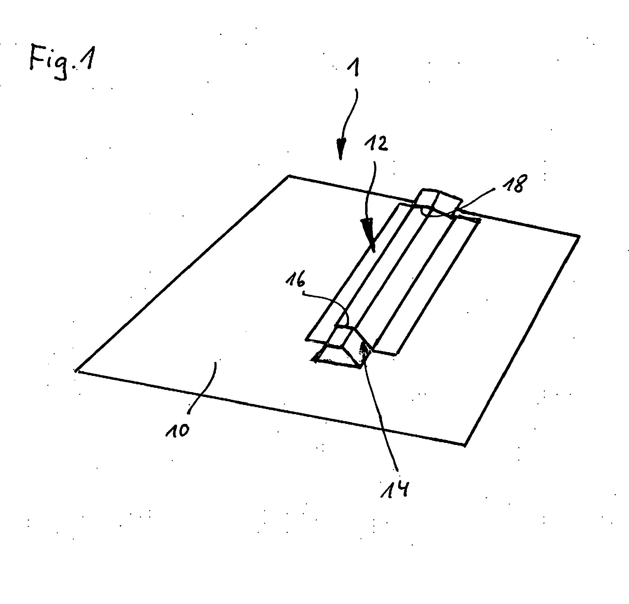

- Fig. 1: einen Bauteil-Rohling aus einem kohlefaserversträrkten Kunststoff mit einem Hohlprofil, das an dem in der Figur sichtbaren offenen Ende mit einem erfindungsgemäßen Stopfen verschlossen ist.

### DARSTELLUNG VON BEVORZUGTEN AUSFÜHRUNGSBEISPIELEN

Fig. 1 zeigt vereinfacht in perspektivischer Darstellung einen Bauteil-Rohling 1 für ein Bauteil aus einem Faserverbundwerkstoff. Im dargestellten Fall ist dies ein Panel eines Flugzeugrumpf aus kohlefaserverstärktem Kunststoff. Der Bauteil-Rohling weist ein Flächenelement 10 auf, das später einen Teil der Rumpfhaut des Flugzeugs bildet. Auf das Flächenelement 10 ist auf dessen Oberseite (der späteren Innenseite des Rumpfes) ein im Querschnitt gewölbter Längsträger 12, ein sogenannter Omega-Stringer aufgebracht und mit dem Flächenelement 10 verbunden. Das Flächenelement 10 und der Längsträger 12 werden nach dem Verbinden, also nach dem Herstellen des Bauteil-Rohlings 1 aus dem Faserverbundwerkstoff, einer thermischen Behandlung unterzogen. Diese thermische Behandlung erfolgt vorzugsweise unter Unterdruckeinfluss, um während des Aushärtens im Kunststoff entstehende Gase aus dem Material zu entfernen und so das Entstehen von Gaseinschlüssen im Material zu verhindern.

Eine übliche thermische Behandlung findet beispielsweise in einem Autoklaven statt.

Nachdem der Schritt des thermischen Behandelns des Bauteil-Rohlings 1 abgeschlossen ist, sind das Flächenelement 10 und der Längsträger 12 fest miteinander verbunden, so dass der Längsträger 12 zusammen mit dem ihm benachbarten Abschnitt des Flächenelements 10 ein Hohlprofil 14 bildet, das an seinen beiden Enden 16, 18 offen ist.

Wird der Bauteil-Rohling 1 aus der Vorrichtung zum thermischen Behandeln entnommen, so sind zunächst Formkerne manuell zu entfernen. Anschließend wird der Bauteil-Rohling 1 einem Weiterverarbeitungsprozess zugeführt, bei dem der thermisch behandelte Bauteil-Rohling 1 zunächst einer zerstörungsfreien Materialprüfung mittels Ultraschall unterzogen wird. Danach erfolgt eine mechanische Bearbeitung des Bauteil-Rohlings 1, wobei der Bauteil-Rohling auf das erforderliche Maß des zu fertigenden Bauteils beschnitten wird und wobei die Schneidkanten verschliffen werden.

Bevor dieser Weiterverarbeitungsprozess jedoch beginnt, wird zu dem Zeitpunkt, zu dem der Bauteil-Rohling 1 aus der Vorrichtung zum thermischen Behandeln entnommen worden ist und die Formkerne entfernt worden sind, jeweils ein Stopfen 2, 3 aus einem geschlossenporigen Schaum, insbesondere aus einem Schaum der weich und flexibel wie ein Schaumstoffmaterial ist, in die an den offenen Enden 16, 18 gebildeten Öffnungen des Hohlprofils 14 abdichtend eingesetzt, so dass das Hohlprofil 14 vollständig geschlossen ist und keine Fremdkörper sowie keine Flüssigkeit in das Hohlprofil 14 eintreten kann.

Der jeweilige Stopfen 2, 3 ist entweder vollständig aus einem geschlossenporigen Schaum gebildet oder er besitzt einen Kern, der mit dem geschlossenporigen Schaum umgeben ist, so dass der geschlossenporige Schaum den Außenumfang des Stopfens 2, 3 bildet. Die geschlossenporige Eigenschaft des Schaums sorgt dafür, dass die Ultraschallwellen, die bei der zerstörungsfreien Materialprüfung vom entsprechenden Prüfgerät ausgesandt werden, nicht in den Schaum des Stopfens 2, 3 eintreten können und dort absorbiert werden, sondern an dessen Oberfläche reflektiert werden. Auf diese Weise ist es möglich, bei der zerstörungsfreien Materialprüfung mittels Ultraschalls nicht nur ein eindeutiges Reflexionssignal des Ultraschalls beim Eintritt in die Wandung des Bauteil-Rohlings zu erhalten, sondern auch auf der Rückseite der Wandung, also an der Grenzfläche zwischen der Wandung des Bauteil-Rohlings 1 und der Oberfläche des Stopfens 2, 3 ein Reflexionssignal erhalten.

Während des mechanischen Bearbeitungsprozesses des Bauteil-Rohlings 1 sorgen die Stopfen 2, 3 dafür, dass weder Späne oder Abrieb, die durch die mechanische Bearbeitung des Bauteil-Rohlings 1 entstehen, noch Wasser oder andere beim Schneiden des Bauteil-Rohlings 1 eingesetzte Flüssigkeiten in das Innere des Hohlprofils 14 eindringen können. Auf diese Weise wird gegenüber der herkömmlichen Verarbeitungsweise, bei der das Hohlprofil offen bleibt, ein aufwendiger Reinigungs- und Trocknungsschritt des fertigen Bauteils eingespart. Nach erfolgter mechanischer Bearbeitung des Bauteil-Rohlings 1 werden die Stopfen 2, 3 entfernt und das erhaltene fertige Bauteil kann einer Weiterverarbeitung beispielsweise einer Lackierung, zugeführt werden.

Die im Beispiel beschriebene Reihenfolge der Schritte der zerstörungsfreien Materialprüfung und des mechanischen Bearbeitens ist nicht zwingend; es kann die mechanische Bearbeitung auch vor der zerstörungsfreien Materialprüfung erfolgen. Wesentlich ist, dass die Öffnungen des Bauteil-Rohlings 1 zum Zeitpunkt der mechanischen Bearbeitung mit den Stopfen 2, 3 verschlossen sind, die dann auch bei der zerstörungsfreien Materialprüfung in den Öffnungen verbleiben.

### Bezugszeichenliste

Es bezeichnen:
- 1: Bauteil-Rohling
- 2: Stopfen
- 3: Stopfen
- 10: Flächenelement
- 12: Längsträger
- 14: Hohlprofil
- 16: offenes Ende des Hohlprofils
- 18: offenes Ende des Hohlprofils

## Patentansprüche

1. Verfahren zur Herstellung eines mit zumindest einem Hohlprofil (14) versehenen Bauteils aus einem Faserverbundwerkstoff mit den Schritten:
a) Herstellen eines Bauteil-Rohlings (1) aus dem Faserverbundwerkstoff;
b) thermisches Behandeln des Bauteil-Rohlings (1);
c) Verschließen der offenen Enden (16, 18) des Hohlprofils (14) mit jeweils einem Stopfen (2, 3);
d) Prüfen des thermisch behandelten Bauteil-Rohlings (1) mittels Ultraschall nach einem Verfahren der zerstörungsfreien Materialprüfung;
e) mechanisches Bearbeiten des Bauteil-Rohlings (1), um das fertige Bauteil zu erhalten;
f) Entfernen der Stopfen (2, 3);
wobei der jeweilige Stopfen (2, 3) aus einem geschlossenporigen Schaum besteht oder diesen zumindest an seinem Außenumfang aufweist.

2. Verfahren zur Herstellung eines mit zumindest einem Hohlprofil (14) versehenen Bauteils aus einem Faserverbundwerkstoff mit den Schritten:
a) Herstellen eines Bauteil-Rohlings (1) aus dem Faserverbundwerkstoff;
b) thermisches Behandeln des Bauteil-Rohlings (1);
c) Verschließen der offenen Enden (16, 18) des Hohlprofils (14) mit jeweils einem Stopfen (2, 3);
d') mechanisches Bearbeiten des Bauteil-Rohlings (1), um das fertige Bauteil zu erhalten;
e') Prüfen des fertigen Bauteils mittels Ultraschall nach einem Verfahren der zerstörungsfreien Materialprüfung;
f) Entfernen der Stopfen (2, 3);
wobei der jeweilige Stopfen (2, 3) aus einem geschlossenporigen Schaum besteht oder diesen zumindest an seinem Aüßenumfang aufweist.

3. Verfahren nach Anspruch 1 oder 2,
**dadurch gekennzeichnet, dass** das Verschließen der offenen Enden (16,18) des Hohlprofils (14) im Schritt c) mit einem Stopfen (2, 3) erfolgt, dessen Schaum aus Polyäthylen gebildet ist oder dieses vorwiegend aufweist.

4. Verfahren nach Anspruch 1, 2 oder 3,
**dadurch gekennzeichnet, dass** das Verschließen der offenen Enden (16,18) des Hohlprofils (14) im Schritt c) mit einem Stopfen (2, 3) erfolgt, dessen Schaum eine Dichte von maximal 30 kg/m³, vorzugsweise zwischen 10 kg/m³ und 20 kg/m³, weiter vorzugsweise unter 18 kg/m³, besonders bevorzugt 15 kg/m³ aufweist.

5. Verfahren nach einem der vorhergehenden Ansprüche,
**dadurch gekennzeichnet, dass** das Verschließen der offenen Enden (16,18) des Hohlprofils (14) im Schritt c) mit einem Stopfen (2, 3) erfolgt, dessen Schaum eine Porengröße von maximal 2 mm, vorzugsweise zwischen 0,3 mm und 1,5 mm, weiter vorzugsweise zwischen 0,6 mm und 1,2 mm aufweist.

6. Verfahren nach einem der vorhergehenden Ansprüche,
**dadurch gekennzeichnet, dass** der Faserverbundwerkstoff kohlefaserverstärkter Kunststoff ist.

7. Verfahren nach einem der vorhergehenden Ansprüche,
**dadurch gekennzeichnet, dass** die mechanische Bearbeitung des Bauteil-Rohlings (1) eine spanabhebende Bearbeitung, wie beispielsweise, Sägen, Fräsen, Schleifen, Hobeln und/oder eine schneidende Bearbeitung, wie beispielsweise Wasserstrahlschneiden, umfasst.

## Claims

1. Method for producing a component provided with at least one hollow profile (14) from a fibre composite material, comprising the following steps:
a) producing a component blank (1) from the fibre composite material;
b) thermally treating the component blank (1);
c) closing each of the open ends (16, 18) of the hollow profile (14) with a stopper (2, 3);
d) testing the thermally treated component blank (1) by means of ultrasound in accordance with a non-destructive material testing method;
e) mechanically processing the component blank (1) in order to obtain the finished component;
f) removing the stoppers (2, 3);
wherein the respective stopper (2, 3) consists of a closed-pore foam or comprises the latter at least at its outer circumference.

2. Method for producing a component provided with at least one hollow profile (14) from a fibre composite material, comprising the following steps:
a) producing a component blank (1) from the fibre composite material;
b) thermally treating the component blank (1);
c) closing each of the open ends (16, 18) of the hollow profile (14) with a stopper (2, 3);
d') mechanically processing the component blank (1) in order to obtain the finished component;
e') testing the finished component by means of ultrasound in accordance with a non-destructive material testing method;
f) removing the stoppers (2, 3);
wherein the respective stopper (2, 3) consists of a closed-pore foam or comprises the latter at least at its outer circumference.

3. Method according to Claim 1 or 2,
**characterized in that** the open ends (16, 18) of the hollow profile (14) are closed in step c) with a stopper (2, 3), the foam of which is formed from or predominantly comprises polyethylene.

4. Method according to Claim 1, 2 or 3,
**characterized in that** the open ends (16, 18) of the hollow profile (14) are closed in step c) with a stopper (2, 3), the foam of which has a density of at most 30 kg/m³, preferably between 10 kg/m³ and 20 kg/m³, further preferably less than 18 kg/m³, particularly preferably 15 kg/m³.

5. Method according to one of the preceding claims,
**characterized in that** the open ends (16, 18) of the hollow profile (14) are closed in step c) with a stopper (2, 3), the foam of which has a pore size of at most 2 mm, preferably between 0.3 mm and 1.5 mm, further preferably between 0.6 mm and 1.2 mm.

6. Method according to one of the preceding claims,
**characterized in that** the fibre composite material is carbon-fibre-reinforced plastic.

7. Method according to one of the preceding claims,
**characterized in that** the mechanical processing of the component blank (1) includes machining, such as for example sawing, milling, grinding, planing, and/or cutting, such as for example water jet cutting.

## Revendications

1. Procédé de fabrication d'un composant muni d'au moins un profilé creux (14) constitué d'un matériau composite renforcé par des fibres, comprenant les étapes suivantes :
a) fabrication d'une pièce brute du composant (1) à partir du matériau composite renforcé par des fibres ;
b) traitement thermique de la pièce brute du composant (1) ;
c) fermeture des extrémités ouvertes (16, 18) du profilé creux (14) avec un bouchon respectif (2, 3) ;
d) contrôle de la pièce brute du composant (1) traitée thermiquement au moyen d'ultrasons selon un procédé de contrôle des matériaux sans destruction ;
e) traitement mécanique de la pièce brute du composant (1) afin d'obtenir le composant fini ;
f) enlèvement des bouchons (2, 3) ;
le bouchon respectif (2, 3) se composant d'une mousse à pores fermés ou présentant celle-ci au moins au niveau de sa périphérie extérieure.

2. Procédé de fabrication d'un composant muni d'au moins un profilé creux (14) constitué d'un matériau composite renforcé par des fibres, comprenant les étapes suivantes :
a) fabrication d'une pièce brute du composant (1) à partir du matériau composite renforcé par des fibres ;
b) traitement thermique de la pièce brute du composant (1) ;
c) fermeture des extrémités ouvertes (16, 18) du profilé creux (14) avec un bouchon respectif (2, 3) ;
d') traitement mécanique de la pièce brute du composant (1), afin d'obtenir le composant fini ;
e') contrôle du composant fini au moyen d'ultrasons selon un procédé de contrôle des matériaux sans destruction ;
f) enlèvement des bouchons (2, 3) ;
le bouchon respectif (2, 3) se composant d'une mousse à pores fermés ou présentant celle-ci au moins au niveau de sa périphérie extérieure.

3. Procédé selon la revendication 1 ou 2,
**caractérisé en ce que** la fermeture des extrémités ouvertes (16, 18) du profilé creux (14) à l'étape c) s'effectue avec un bouchon (2, 3) dont la mousse est formée de polyéthylène ou qui présente une majorité de celui-ci.

4. Procédé selon la revendication 1, 2 ou 3,
**caractérisé en ce que** la fermeture des extrémités ouvertes (16, 18) du profilé creux (14) à l'étape c) s'effectue avec un bouchon (2, 3) dont la mousse présente une densité maximale de 30 kg/m³, de préférence comprise entre 10 kg/m³ et 20 kg/m³, plus préférablement inférieure à 18 kg/m³, et tout particulièrement préférablement de 15 kg/m³.

5. Procédé selon l'une quelconque des revendications précédentes,
**caractérisé en ce que** la fermeture des extrémités ouvertes (16, 18) du profilé creux (14) à l'étape c) s'effectue avec un bouchon (2, 3) dont la mousse présente une taille de pores maximale de 2 mm, de préférence comprise entre 0,3 mm et 1,5 mm, plus préférablement entre 0,6 mm et 1,2 mm.

6. Procédé selon l'une quelconque des revendications précédentes,
**caractérisé en ce que** le matériau composite renforcé par des fibres est un plastique renforcé par des fibres de carbone.

7. Procédé selon l'une quelconque des revendications précédentes,
**caractérisé en ce que** le traitement mécanique de la pièce brute du composant (1) comprend un usinage par enlèvement de copeaux, comme par exemple un sciage, un fraisage, une rectification, un rabotage et/ou un usinage par découpage, comme par exemple un découpage au jet d'eau.
